(19) Europäisches Patentamt
European Patent Office
Office européen des brevets

(11) EP 1 983 418 A1

(12) EUROPEAN PATENT APPLICATION

(43) Date of publication:
22.10.2008 Bulletin 2008/43

(51) Int Cl.:
G06F 3/048 (2006.01)

(21) Application number: 08154504.8

(22) Date of filing: 15.04.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 16.04.2007 JP 2007107221

(71) Applicant: FUJITSU LIMITED
Kawasaki-shi, Kanagawa 211-8588 (JP)

(72) Inventors:
• Funaki, Isao
Kanagawa 211-8588 (JP)
• Maekawa, Hiroyuki
Kanagawa 211-8588 (JP)
• Kita, Aki
Kanagawa 211-8588 (JP)

(74) Representative: Kreutzer, Ulrich et al
Cabinet Beau de Loménie
Bavariaring 26
80336 München (DE)

(54) **Display device, display program storage medium, and display method**

(57) A display device (500) includes: a data acquisition section (514) which acquires plural data with which dates and/or times are associated; and a date and/or time acquisition section (514) which acquires dates and/or times associated with the plurality of data. The display device further includes: a data classification section (524) which classifies the plural data to plural groups which belong to plural time regions which do not overlap with each other, based on the length of intervals between the dates and/or times acquired by the date and/or time acquisition section; and a display section (519) which classifies plural icons which show the plural data to the groups and displays the plural icons.

Fig. 4

## Description

Field of the Invention

The present invention relates to a display device, a display program storage medium, and a display method for displaying a list of data to which dates/times are caused to correspond.

Description of the Related Art

Recently, image pick-up devices can be carried with ease because most compact equipment such as mobile phones and the like, which are carried at all times, have an image pick-up device mounted thereon in addition to that digital cameras are rapidly made compact. Since image pick-up devices mounted on digital cameras and compact equipment can acquire digital picked-up images, the picked-up images can be instantly displayed on a liquid crystal display and the like in a field for confirmation, and unnecessary picked-up images can be deleted before they are printed out. Further, when plural picked-up images are collectively recorded on a recording medium and the like, the picked-up images can be stored in high image quality without taking up much space.

Further, recently, applications for album are widely used to put picked-up images in order using personal computers. The personal computers are advantageous in that they can store a lot of picked-up images without paying any heed to a remaining capacity because they have a large capacity hard disc device and that jobs for copying picked-up images and attaching them to an electronic mail and the like can be easily executed. Accordingly, many users temporarily store all the picked-up images, and thus there is a case that a lot of picked-up images are accumulated in a hard disc device of a personal computer without being browsed, from which a problem arises in that it is very difficult to search a desired picked-up image from the lot of picked-up images.

Japanese Patent Application Publication Nos. 11-25541, 2002-84469, and 10-243309 disclose techniques for displaying a program guide in which the titles of programs to be delivered are disposed on a three-dimensional space which uses time, date, week, and the like as its axes. Although these techniques display a list of the programs to be delivered, when the list is used as a list for displaying picked-up images, the list can be used as a tool for recognizing when the images were picked up.

Further, since images picked up in events such as a school entrance ceremony, travel, and the like are collectively browsed often, it is preferable to display a lot of picked-up images stored to a hard disc device by classifying them to respective events. As a method of classifying picked-up images to plural groups, it is considered to classify them to respective image pick-up dates/times. However, in this method, since images picked up during travel of several days are classified to plural events, the method is disadvantageous in that it is difficult to confirm the picked-up images.

As to this point, Japanese Patent Application Publication No. 2004-172849 discloses a technique for displaying picked-up images by classifying them to plural groups based on a time elapsed from an image pick-up date and on the frequency of use of the picked-up images. According to the technique disclosed in Japanese Patent Application Publication No. 2004-172849, since the images, which are picked-up at approximately the same time and browsed at the same frequency, are classified to the same group, it is possible to classify the images, which are picked up in travel and collectively browsed often, to the same group.

However, according to the technique disclosed in Japanese Patent Application Publication No. 2004-172849, it is necessary to browse the picked-up images at least once and to gather the picked-up images having the same frequency of use from plural images picked up in one event, which also has a problem in that a job, which is as troublesome as the case that a user manually classifies picked-up images, is eventually required.

This problem not only arises when picked-up image data is classified to respective events but also generally arises when, for example, a lot of document data and the like are classified to respective projects.

SUMMARY OF THE INVENTION

The present invention has been made in view of the above circumstances and provides a display device, a display program storage medium, and a display method capable of displaying data after it is accurately classified to plural groups. The display device of the present invention includes:

a data acquisition section which acquires plural data with which dates and/or times are associated;
a date and/or time acquisition section which acquires dates and/or times associated with the plural data;
a data classification section which classifies the plural data to plural groups which belong to plural time regions which do not overlap with each other, based on the length of intervals between the dates and/or times acquired by the date and/or time acquisition section; and
a display section which classifies plural icons which show the plural data to the groups and displays the plural icons.

Ordinarily, an image pick-up operation is executed at short intervals during an event such as a school entrance ceremony, travel, and the like, and a time between one event and another event is longer than that between image pick-up operations executed during one event in many cases. According to the display device of the present invention, since plural data are classified to plural groups based on the length of the intervals between dates and/or times which are associated with the plural data, the plural data can be accurately classified to the respective events.

In the display device of the present invention, it is preferable that the data is image data which represents images of subjects and with which the image pick-up dates and/or times of the images are associated, and the date and/or time acquisition section acquires the image pick-up dates and/or times.

Since it is often required to classify picked-up image data which shows picked-up images to respective events, it is suitable to classify them based on the intervals between image pick-up operations, and thus a significant advantage can be acquired by the display device of the present invention.

In the display device of the present invention, it is preferable that the data classification section classify the plural data to the plural groups based on the relative length of intervals between the dates and/or times acquired by the date and/or time acquisition section.

Since plural data are classified based on the relative length of the intervals between dates and/or times, the images picked up in travel of several days can be classified to the same group.

In the display device of the present invention, it is preferable that when the data classification section classifies the plural data to the groups, the data classification section time-sequentially confirms intervals between the dates and/or times associated with the data, and the two data, with which are associated two dates and/or times across an interval whose length is changed in excess of a predetermined degree with respect to an interval immediately before the interval, are classified to different groups.

The sections of events can be accurately confirmed by using the change of the intervals between dates and/or times which are associated with the respective data.

In the display device of the present invention, it is preferable that the display section display a three-dimensional space having an axis of the groups and dispose the icons of the data to the position of the group, to which the data is classified, on the three-dimensional space.

What data belongs to which group can be easily confirmed by the positions of icons disposed on the three-dimensional space.

It is preferable that the display device of the present invention include an auxiliary display section for displaying a two-dimensional space having an axis of the groups and disposing a mark to the position corresponding to a group to which the data is classified on the two-dimensional space to show that data exists in the group.

When the icons of a lot of data are disposed and displayed, there is a possibility that whether these icons are present or not cannot be confirmed because they are overlapped. The existence of data can be easily recognized by disposing and displaying the marks on the two-dimensional space in addition to the icons displayed on the display section.

It is preferable that the display device of the present invention further include:

a designation section which designates a group on the two-dimensional space by displaying a designation frame along an axis different from the axis of the groups on the two-dimensional space, and moving the designation frame along the axis of the groups; and
a display control section which causes the display section to dispose the icons in a three-dimension display space with the group designated by the designation section displayed on a foremost surface.

The display on the three-dimensional space can be easily switched by moving the designation frame on the two-dimensional space.

It is preferable that the display device of the present invention further include a data number display section for displaying the number of data classified to the group designated by the designation section.

According to the preferable display device, the number of data classified to the group designated by the designation section can be easily confirmed.

In the display device of the present invention, it is preferable that the data acquisition section acquire the plural data from a storage section in which the plural data are stored.

According to the preferable display device, a lot of data stored to a hard disc device and the like can be classified to the plural groups and displayed.

A display program storage medium of the present invention stores a display program which is executed and constructs in a computer:

a data acquisition section which acquires plural data with which dates and/or times are associated;
a date and/or time acquisition section which acquires the dates and/or times associated with the plural data;

a data classification section which classifies the plural data to plural groups belonging to plural time regions which do not overlap with each other, based on the length of intervals between the dates and/or times acquired by the date and/or time acquisition section; and

a display section which classifies plural icons showing the plural data to the groups and displays the icons.

Note that only the basic feature of the display program storage medium is described here, but this is only to avoid aduplication, and the display program storage medium according to the present invention is not limited to the above basic feature and includes various additional features corresponding to the additional features of the display device described above.

Further, in the elements such as the date and/or time acquisition section and the like which are constructed on a computer system by the display program of the present invention, one element may be constructed by one program part or plural elements may be constructed by one program part. Further, these elements may be constructed so as to execute the operations thereof by themselves or may be constructed so as to execute the operations by instructing other program or a program part assembled to the computer system.

Further, a display method of the present invention includes:

a data acquisition step which acquires plural data with which dates and/or times are associated;

a date and/or time acquisition step which acquires the dates and/or times associated with the plural data;

a data classification step which classifies the plural data to plural groups belonging to plural time regions which do not overlap with each other, based on the length of intervals between the dates and/or times acquired in the date and/or time acquisition step; and

a display step which classifies plural icons showing the plural data to the groups and displays the icons.

According to the display method of the present invention, data such as picked-up image data showing picked-up images and the like can be accurately classified to the plural groups.

Note that only the basic feature of the display method is also described here, but this is only to avoid a duplication, and the display method according to the present invention is not limited to the above basic feature and includes various additional features corresponding to the additional features of the display device described above.

According to the present invention, picked-up images can be accurately classified to the respective events and displayed.

BRIEF DESCRIPTION OF THE DRAWINGS

Fig. 1 is a schematic diagram showing a program delivery system to which an embodiment of the present invention is applied;

Fig. 2 is a diagram showing an internal configuration of a personal computer;

Fig. 3 is a conceptual view showing a CD-ROM to which a list display program is stored;

Fig. 4 is a function block diagram of a list display device;

Fig. 5 is a flowchart showing a flow of a processing for displaying a list of picked-up images executed in an image pick-up date/time mode;

Fig. 6 is a conceptual view showing an example of the three-dimensional space;

Fig. 7 is a conceptual view showing an example of the two-dimensional space;

Fig. 8 is a view showing an example of the display screen on which a three-dimensional image, a two-dimensional image, and a scroll bar are displayed;

Fig. 9 is a view showing an example of the display screen after a popup window is displayed;

Fig. 10 is a conceptual view of the picked-up image data stored to a storage section;

Fig. 11 a flowchart showing a flow of a processing for displaying a list of picked-up images executed in an event mode;

Fig. 12 is a view showing an example of the condition setting screen for setting classification conditions for classifying picked-up images;

Fig. 13 is a flowchart showing a series of processings for classifying plural picked-up images shown in Fig. 10 to plural event groups by an event classification section;

Fig. 14 is a view showing an example of the display screen on which three-dimensional images, two-dimensional images, and a scroll bar 623 are displayed; and

Fig. 15 is a view showing an example of the display screen after an event group is switched.

DETAILED DESCRIPTION OF THE INVENTION

An embodiment of the present invention will be described below referring to the drawings.

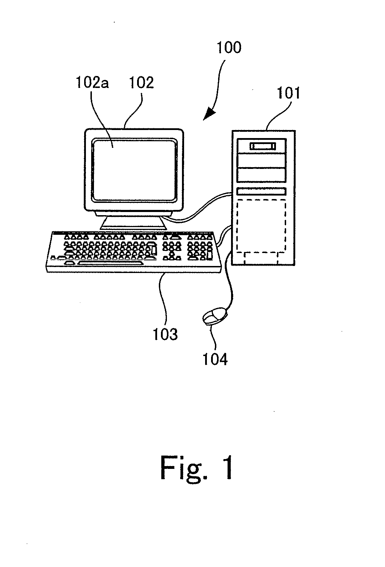

Fig. 1 is a diagram showing an outside appearance of a personal computer to which an embodiment of the present invention is applied.

A personal computer 100 includes a main body device 101, an image display device 102, a keyboard 103, and a mouse 104. The image display device 102 displays an image on a display screen 102a in response to an instruction from the main body device 101, the keyboard 103 inputs various types of information to the main body device 101 in response to a key operation, and the mouse 104 designates an arbitrary position on the display screen 102a and inputs an instruction according to, for example, an icon and the like displayed at the position. Further, although not shown, the main body device 101 has a CD/DVD mounting port, to which DVD and CD-ROM are mounted, and an FD mounting port to which a flexible disc (hereinafter, abbreviated as FD) is mounted.

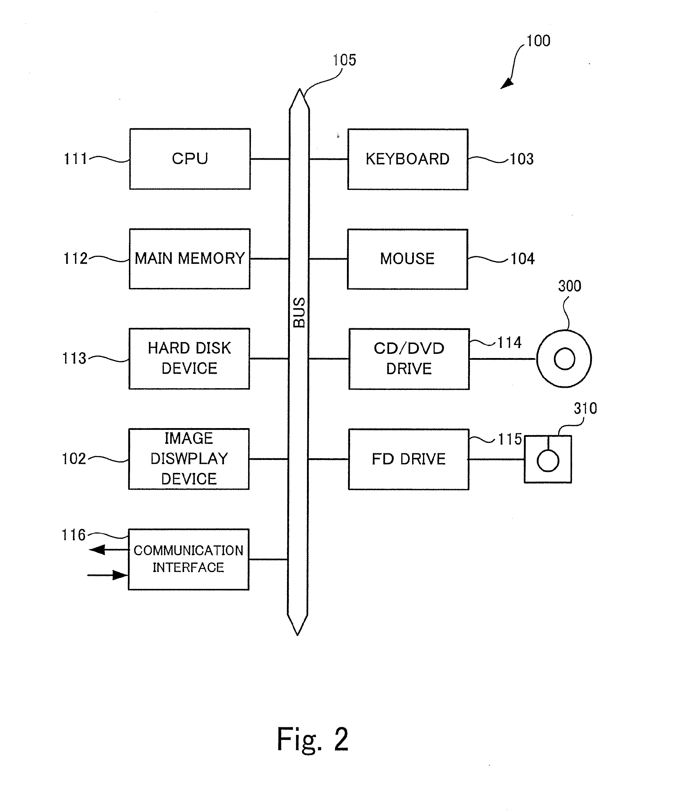

Fig. 2 is a diagram showing an internal configuration of the personal computer 100.

As shown in Fig. 2, the main body device 101 includes in its inside a CPU 111, a main memory 112, a hard disc device 113, a CD/DVD drive 114, an FD drive 115, and a communication interface 116. The CPU 111 executes various types of programs, the main memory 112 is arranged such that the programs stored to the hard disc device 113 are read out thereto and developed therein so that they are executed by the CPU 111, the hard disc device 113 stores the various types of programs, data, and the like, the CD/DVD drive 114 accesses a CD-ROM 300 or a DVD when either is mounted, the FD drive 115 accesses a FD 310 when it is mounted thereon, and the communication interface 116 is connected to an outside device such as a digital camera and the like and transmits and receives data to and from the outside device. These various types of elements are connected to the image display device 102, the keyboard 103, and the mouse 104, which are also shown in Fig. 2, through a bus 105.

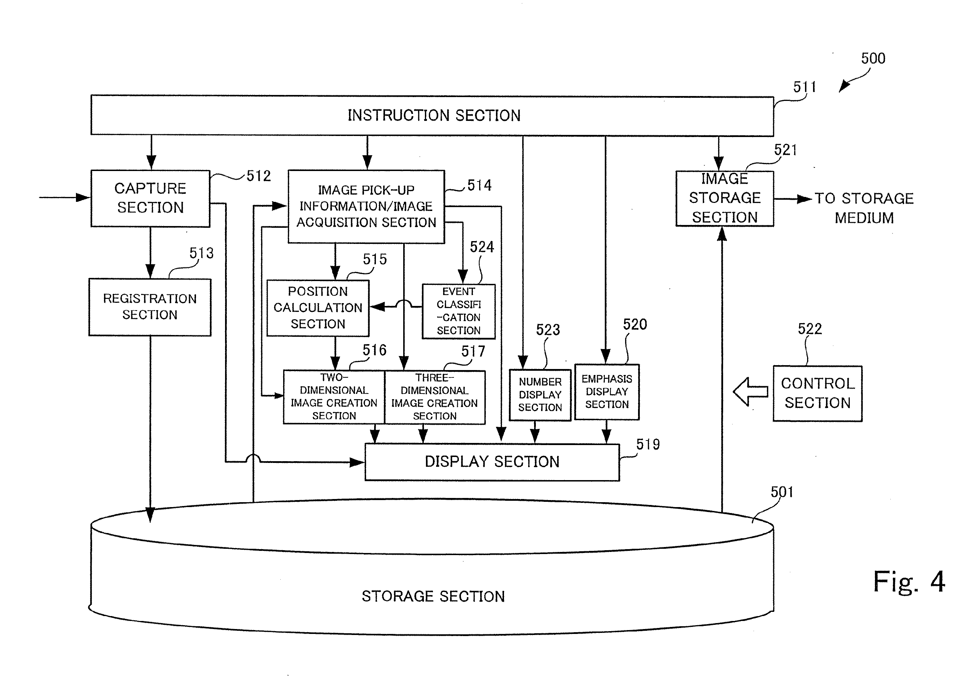

The CD-ROM 300 stores a list display program to which an embodiment of a display program storage medium of the present invention is applied. The CD-ROM 300 is mounted on the CD/DVD drive 114, and the list display program stored to the CD-ROM 300 is uploaded to the personal computer 100 and stored to the hard disc device 113. When the list display program is started and executed, a list display device 500, to which an embodiment of a display device of the present invention is applied, is constructed in the personal computer 100 (refer to Fig. 4).

Next, the list display program executed in the personal computer 100 will be described.

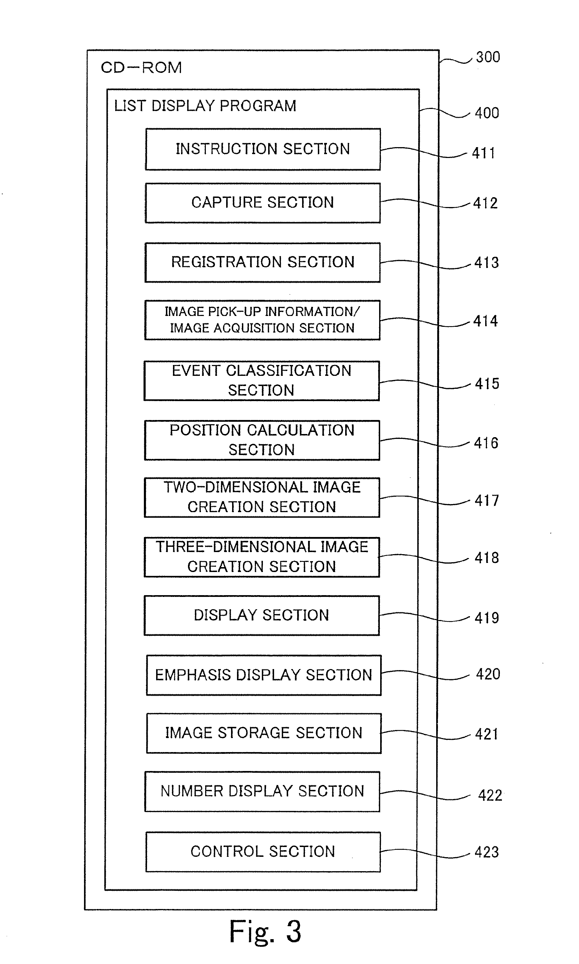

Fig. 3 is a conceptual view showing the CD-ROM 300 to which the list display program is stored.

The list display program 400 includes an instruction section 411, a capture section 412, a registration section 413, a picked-up image information/image acquisition section 414, an event classification section 415, a position calculation section 416, a two-dimensional image creation section 417, a three-dimensional image creation section 418, a display section 419, an emphasis display section 420, an image storage section 421, a number display section 422, and a control section 423. The respective sections of the list display program 400 will be described in detail together with the operations of the respective sections of the list display device 500.

Note that although the CD-ROM 300 storing the list display program in Fig. 3 is used as an example, the display program storage medium of the present invention is not limited to the CD-ROM and may be a storage medium such as an optical disc, MO, FD, a magnetic tape, and the like other than the CD-ROM. Further, the display program of the present invention may be directly supplied to the computer through a communication network without using the storage medium.

Fig. 4 is a function block diagram of the list display device 500 constructed in the personal computer 100 when the list display program 400 is installed on the personal computer 100 shown in Fig. 1.

The list display device 500 shown in Fig. 4 includes an instruction section 511, a capture section 512, a registration section 513, a picked-up image information/image acquisition section 514, a position calculation section 515, a two-dimensional image creation section 516, a three-dimensional image creation section 517, a display section 519, an emphasis display section 520, an image storage section 521, a control section 522, a number display section 523, an event classification section 524, and a storage section 501. When the list display program 400 shown in Fig. 3 is installed on the personal computer 100 shown in Fig. 1, the instruction section 411 of the list display program 400 constructs the instruction section 511 of Fig. 4. In the same manner, the capture section 412 constructs the capture section 512, the registration section 413 constructs the registration section 513, the picked-up image information/image acquisition section 414 constructs the picked-up image information/image acquisition section 514, the position calculation section 416 constructs the position calculation section 515, the two-dimensional image creation section 417 constructs the two-dimensional image creation section 516, the three- dimensional image creation section 418 constructs the three-dimensional image creation section 517, the display section 419 constructs the display section 519, the emphasis display section 420 constructs the emphasis display section 520, the image storage section 421 constructs the image storage section 521, the control section 423 constructs the control section 522, the number display section 422 constructs the number display section 523, and the event classification section 415 constructs the event classification section 524.

The respective elements of Fig. 4 are different from the respective elements of the list display program 400 shown in Fig. 3 in that the former elements are composed of a combination of hardware of the computer and OS and application programs executed by the computer, whereas the latter elements are composed of only the application programs of them.

The respective elements of the list display device 500 shown in Fig. 4 will be described below, by which the respective elements of the list display program 400 shown in Fig. 3 will be also described.

The list display device 500 shown in Fig. 4 shows a list of picked-up image data which represent the images of picked-up subjects as well as records the picked-up image data selected by a user to a recording medium and the like.

When a digital camera or a recording medium, to which picked-up images are recorded, is connected to the personal computer 100 shown in Fig. 1, the capture section 512 captures picked-up images to which picked-up image information such as image pick-up dates/times, image pick-up conditions, and the like is attached. The captured picked-up image data and the picked-up image information are transmitted to the registration section 513.

The registration section 513 creates thumbnail images by reducing the picked-up images represented by the picked-up image data transmitted from the capture section 512 and stores the picked-up image data to the storage section 501 together with the picked-up image information and the thumbnail images.

The hard disc device 113 shown in Fig. 2 has the role of the storage section 501 and stores the picked-up image data representing the picked-up images, the picked-up image information indicating the image pick-up conditions, the image pick-up dates/times, and the like of the picked-up images and the thumbnail images in which the picked-up images are reduced as a set. The storage section 501 corresponds to an example of the storage device according to the present invention.

The list display device 500 of the embodiment has an "image pick-up date/time mode" and an "event mode". In the "image pick-up date/time mode", the picked-up images stored to the storage section 501 are arranged and displayed based on image pick-up dates/times, and, in the "event mode", the picked-up images stored to the storage section 501 are classified to event groups based on the relative intervals between the image pick-up dates/times as well as the picked-up images in the same event group are classified to scene groups based on the intervals between the image pick-up dates/times and displayed. An image pick-up date/time button for executing the "image pick-up date/time mode" and an event button for executing the "event mode" are previously prepared. First, how a list of the picked-up images is displayed by the "image pick-up date/time mode" will be described.

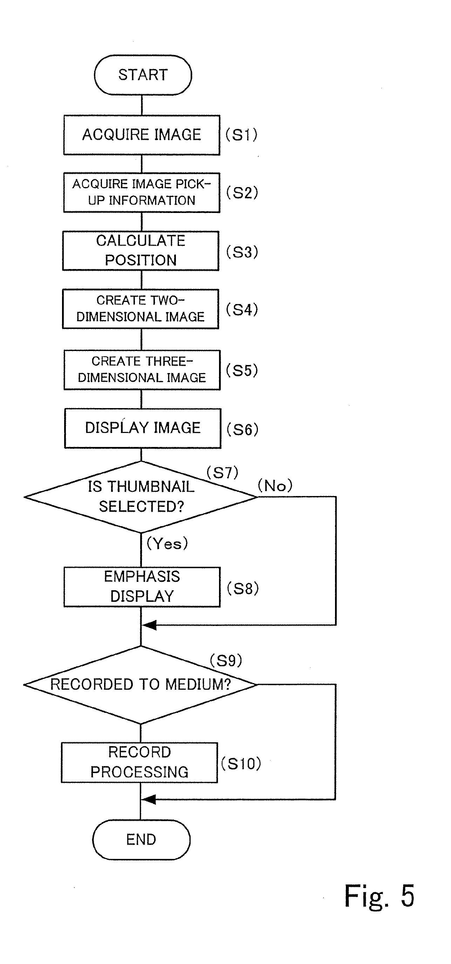

Fig. 5 is a flowchart showing a flow of a processing for displaying the list of picked-up images executed in the image pick-up date/time mode.

When the user selects the image pick-up date/time button using the mouse 104 and the like, the instruction section 511 of Fig. 4 instructs the picked-up image information/image acquisition section 514 to execute the "image pick-up date/time mode".

When it is instructed to display the list, the picked-up image information/image acquisition section 514 acquires the thumbnail images and the picked-up image information stored to the storage section 501 (steps S1 and S2 of Fig. 5). The thumbnail images are created by reducing the picked-up images and are the data corresponding to the picked-up images. The acquired picked-up image information is transmitted to the position calculation section 515, and the acquired thumbnail images are transmitted to the three-dimensional image creation section 517.

The position calculation section 515 calculates a three-dimensional position, to which the image pick-up date/time included in the picked-up image information transmitted from the picked-up image information/image acquisition section 514 correspond, on a three-dimensional space, which has three axes, that is, an axis sectioning one day to each four hours, an axis further sectioning the four hours to each one hour, and an axis showing one day and calculates a two-dimensional position, which corresponds to the three-dimensional position, on a two-dimensional space having two axes, that is, an axis sectioning one day to each four hours and an axis showing one day (step S3 of Fig. 5).

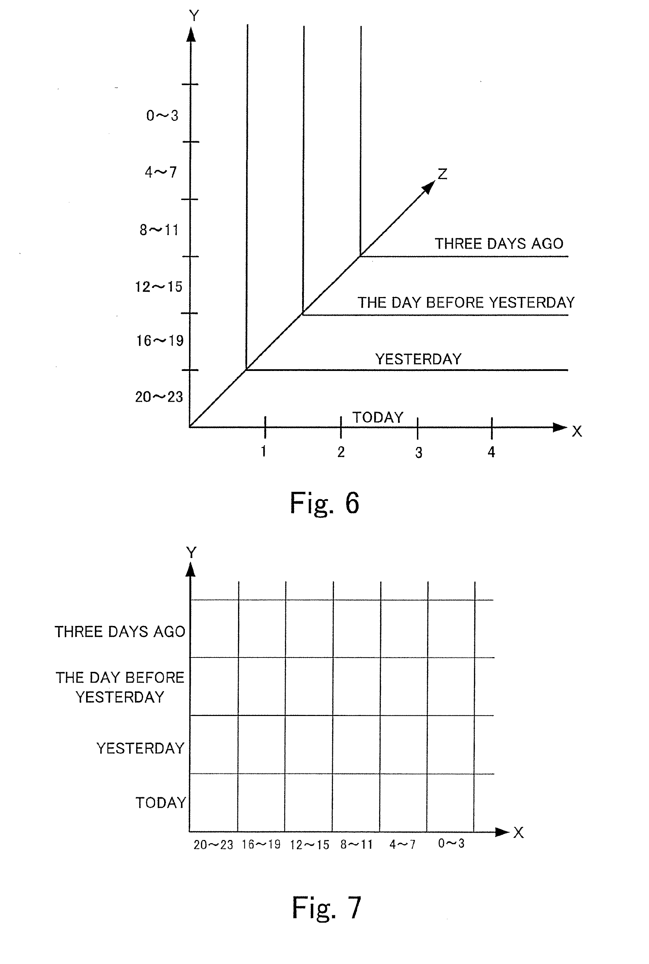

Fig. 6 is a conceptual view showing an example of the three-dimensional space, and Fig. 7 is a conceptual view showing an example of the two-dimensional space.

As shown in Fig. 6, the three-dimensional space is applied to the embodiment, where the three-dimensional space has a Y-axis (longitudinal direction) showing values acquired by sectioning one day to each four hours, an X-axis (lateral direction) showing values acquired by further sectioning the four hours allocated to the Y-axis to each one hour, and Z-axis (depth direction) showing one day.

Values 2, 3, 4 starting from 1 are sequentially allocated to the X-axis of the three-dimensional space, and a value, which is acquired by adding 1 to the value acquired by dividing the "HH o'clock" of an image pick-up date/time (YYYY year, MM month, DD date, PP minutes past HH o'clock) by 4 is acquired, is obtained as a value on the X-axis.

Respective four hours of 19 o'clock to 16 o'clock, ..., 7 o'clock to 4 o'clock, 3 o'clock to 0 o'clock are sequentially allocated to the Y-axis of the three-dimensional space using the four hours from 23 o'clock to 20 o'clock as a start point. A value acquired by dividing the "HH o'clock" of the image pick-up date/time (YYYY year, MM month, DD date, PP minutes past HH o'clock) by 4 is obtained as a value on the Y-axis.

Yesterday, the day before yesterday, ..., are sequentially allocated to the Z-axis of the three-dimensional space from today as a start point, and a value on the Z-axis is calculated based on an image pick-up date/time (YYYY year, MM month, DD date, PP minutes past HH o'clock).

Further, as shown in Fig. 7, the two-dimensional space is applied in the embodiment, wherein the two-dimensional space has an X-axis (lateral direction) showing values acquired by sectioning one day to each four hours and a Y-axis (longitudinal direction) showing one day.

Likewise the Y-axis of the three-dimensional space shown in Fig. 6, respective four hours of from 19 o'clock to 0 16 o'clock, ..., from 7 o'clock to 4 o'clock, and from 3 o'clock to 0 o'clock are sequentially allocated to the X-axis of the two-dimensional space using the four hours from 23 o'clock to 20 o'clock as a start point, and the values on the Y-axis in the three-dimensional space are calculated as the values on the X-axis in the two-dimensional space as they are.

Yesterday, the day before yesterday, ... , are sequentially allocated to the Y-axis of the two-dimensional space from today as a start point, and the values on the Z-axis in the three-dimensional space are calculated as the values on the Y-axis in the two-dimensional space as they are.

When, for example, plural images are picked up in the same time zone of the same date, plural positions are calculated in correspondence to the "HH o'clock" the image pick-up date/time of the respective picked-up images as the positions on the three-dimensional space. However, the same position is calculated for the plural picked-up images as the position on the two-dimensional space. That is, a mark on the two-dimensional space shows that one or more picked-up images picked-up in the same time zone of the same date exist.

The position calculated on the two-dimensional space (two-dimensional position) is transmitted to the two-dimensional image creation section 516, and the position calculated on the three-dimensional space (three-dimensional position) is transmitted to the three-dimensional image creation section 517.

The two-dimensional image creation section 516 creates a two-dimensional image in which the mark showing that the picked-up image exist is disposed at the two-dimensional position on the two-dimensional space transmitted from the position calculation section 515 (step S4 of Fig. 5). The created two-dimensional image is transmitted to the display section 519.

The control section 522 instructs the display section 519 to display a scroll bar along the Y-axis on the two-dimensional space.

The three-dimensional image creation section 517 creates a three-dimensional image in which the thumbnail images transmitted from the picked-up image information/image acquisition section 514 are disposed at the positions transmitted from the position calculation section 515 on the three-dimensional space (step S5 of Fig. 5). The created three-dimensional images are transmitted to the display section 519.

Further, the number display section 523 calculates the number of the picked-up images to be displayed on the foremost surface on the three-dimensional image, and the calculated number of the picked-up images is transmitted to the display section 519.

The display section 519 displays the two-dimensional image transmitted from the two-dimensional image creation section 516, the three-dimensional image transmitted from the three-dimensional image creation section 517, the scroll bar instructed by the control section 522, and the number of the picked-up images transmitted from the number display section 523 on the display screen 102a (step S6 of Fig. 5).

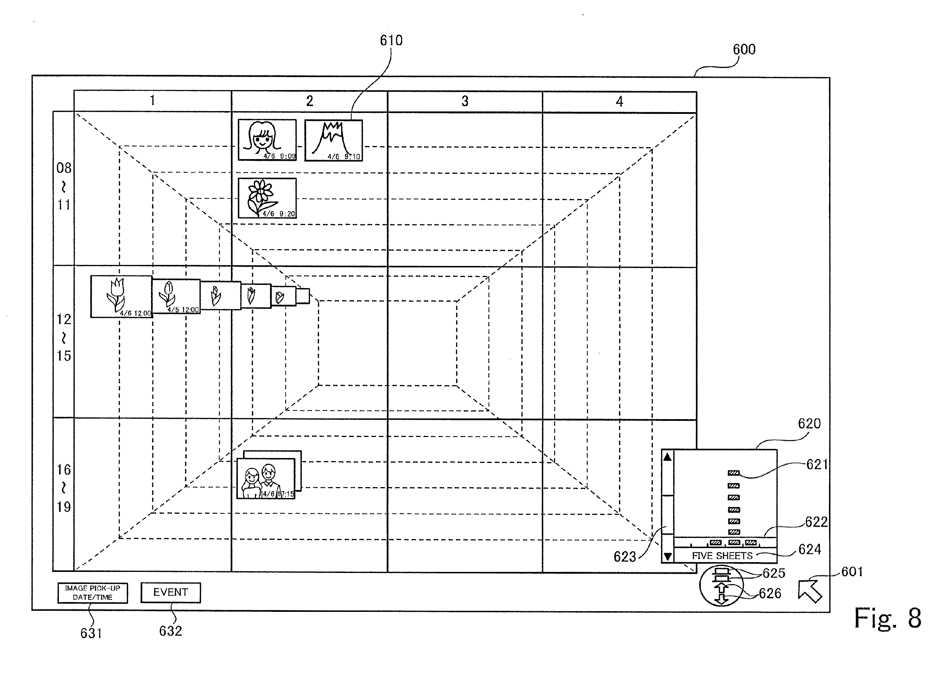

Fig. 8 is a view showing an example of the display screen 102a on which the three-dimensional image 600, the two-dimensional image 620, and the scroll bar 623 are displayed.

Note that in an initial state in which it is instructed to display the list as well as the three-dimensional image 600, the two-dimensional image 620, and the scroll bar 623 are displayed, only a region showing a period of one week from today as a start point is displayed on the three-dimensional image 600 and the two-dimensional image 620.

In the three-dimensional image 600 shown in Fig. 8, the thumbnail images 610 of the images picked up on the same date are arranged and displayed on the same surface. The positions of the thumbnail images 610 on the Y-axis show the time zones (each four hours) in which the images shown by the thumbnail images 610 are picked up, and the positions of the thumbnail images 610 on the X-axis show the times of each one hour in the time zones shown by the Y-axis. When, for example, the position of the thumbnail images 610 on the Y-axis is "8o'clock to 11 o'clock ", and the position thereof on the X-axis is "2", it is shown that the thumbnail images 610 are picked-up at "9 o'clock" which is a second earlier time in the time zones "8, 9, 10, and 11 o'clock" shown by the positions on the Y-axis. Further, the image pick-up date/time button 631, which is used to display the list of the picked-up images according to the "image pick-up date/time mode", and the event button 632, which is used to display the list of the picked-up images according to the "event mode" are also displayed side by side in the three-dimensional image 600.

As described above, according to the list display device 500 of the embodiment, since the thumbnail images of the images picked up on the same date are arranged on the same surface in the three-dimensional image 600, the images picked up, for example, in a school entrance ceremony can be confirmed collectively.

Further, the two-dimensional image 620 shown in Fig. 8 displays marks 621 at the positions corresponding to the positions at which the respective thumbnail images 610 are disposed on the three-dimensional image 600 on the two-dimensional space in which the values of each four hours are set to the X-axis and a date is set to the Y-axis. The marks 621 show the existence of the images which are picked up in the "time zone" shown by the X-axis on the "date" shown by the Y-axis.

As described above, according to the list display device 500 of the embodiment, whether or not images picked up on a predetermined date exist can be easily confirmed by looking at the two-dimensional image 620.

Further, the two-dimensional image 620 also displays the scroll bar 623, a frame 622, a number display section 624, a period change button 625, and a date change button 626. The scroll bar 623 extends along the Y-axis (date) and designates a date on the two-dimensional image 620, the frame 622 surrounds the range of the date selected by the scroll bar 623, the number display section 624 shows the number of the images picked up on the image pick-up date surrounded by the frame 622, the period change button 625 switches the period described above, and the date change button 626 switches the date.

The image pick-up date surrounded by the frame 622 is the image pick-up date of the picked-up images displayed on the foremost surface on the three-dimensional image 600, and the number of the images picked up on the same date can be easily recognized by confirming the number display section 624.

Further, when a right button of the mouse indicating a pointer 601 is clicked, a popup window 640 for selecting the thumbnail images is displayed.

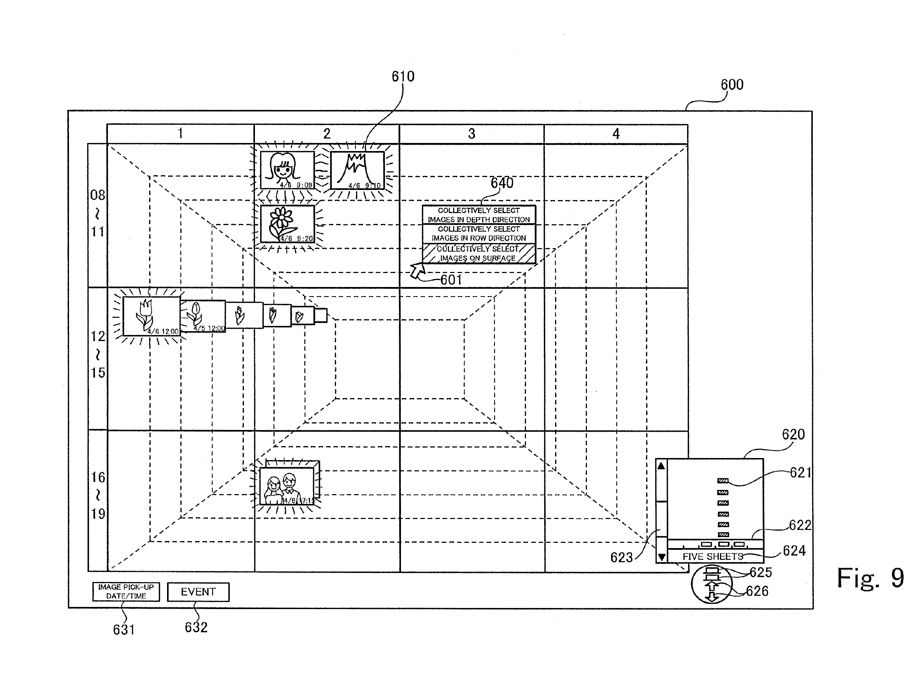

Fig. 9 is a view showing an example of the display screen 102a after the popup window is displayed.

The popup window 640 shown in Fig. 9 prepares a "depth menu", a "row menu", and a "surface menu". The "depth menu" is used to collectively select the thumbnail images of the images picked up in the same time zone, the "row menu" is used to collectively select the thumbnail images of the images picked up in the same time zone of the same date, and the "surface menu" is used to collectively select the thumbnail images of the images picked up on the same date.

When the user selects the thumbnail images 610 using the popup window 640 (step S7 of Fig. 5: Yes), designated contents are transmitted from the instruction section 511 of Fig. 4 to the emphasis display section 520 which displays the selected thumbnail images 610 and the marks 621 corresponding to the thumbnail images 610 in an emphasized fashion (step S8 of Fig. 5). In an example of Fig. 9, the "surface menu" of the popup window 640 is designated by the user, the thumbnail images 610, which show the images picked up on the same date are collectively selected and displayed in the emphasized fashion (displayed by being lit). Further, the marks 621, which are disposed on the two-dimensional image 620 at the positions corresponding to the pick-up date of the picked-up images shown by the selected thumbnail images 610 are also displayed in the emphasized fashion (voided display). As described above, since the selected thumbnail images and the mark images corresponding to the thumbnail images are displayed in the emphasized fashion, when the images shown by the thumbnail images currently selected were picked-up can be visually confirmed easily.

When the user clicks the mouse 104 shown in Fig. 1 on the right side thereof in the state that the thumbnail images 610 are selected, a popup window is displayed to store the picked-up images of the selected thumbnail images 610 to a recording medium.

When the user selects an instruction displayed on the popup window using the pointer 601 (step S9 of Fig. 5: Yes), the contents of the instruction are transmitted to the image storage section 521 of Fig. 4. The image storage section 521 acquires the picked-up image data of the selected thumbnail images 610 from the storage section 501, and the picked-up image data is stored to a DVD (not shown) or the like mounted in place of the CD-ROM 300 on the personal computer 100, through the CD/DVD drive 114 shown in Fig. 2 (step S10 of Fig. 5).

As described above, according to the "image pick-up date/time mode", since a lot of picked-up image programs are stored to the storage section 501, even if the thumbnail images are overlapped on the three-dimensional image 600 in a depth direction, on which day an image pick-up operation is executed and the like can be easily recognized by confirming the two-dimensional image 620.

The flow of the processing according to the "image pick-up date/time mode" has been described above, and the flow of a processing according to the "event mode" will be described next.

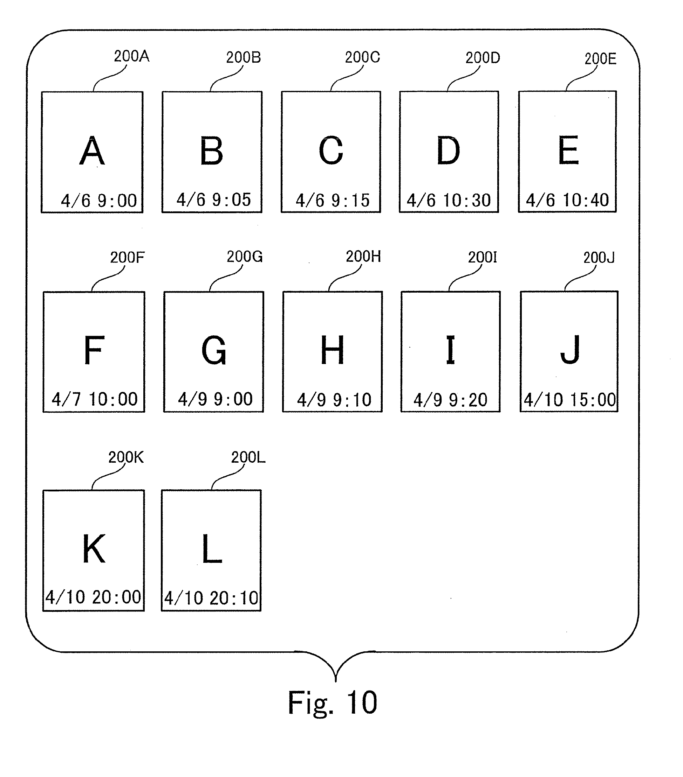

Fig. 10 is a conceptual view of the picked-up image data stored to the storage section 501.

Hereinafter, the embodiment will be described assuming that the storage section 501 stores picked-up images whose image pick-up dates/times are different from each other, that is, an image 200A picked-up on "April 6, 2007, 9: 00", an image 200B picked-up on "April 6, 2007, 9: 05", an image 200C picked-up on "April 6, 2007, 9: 15", an image 200D picked-up on "April 6, 2007, 10: 30", an image 200E picked-up on "April 6, 2007, 10: 40", an image 200F picked-up on "April 7, 2007, 10: 00", an image 200G picked-up on "April 9, 2007, 9: 00", an image 200H picked-up on "April 9, 2007, 9: 10", an image 200I picked-up on "April 9, 2007, 9: 20", an image 200J picked-up on "April 10, 2007, 15: 00", an image 200K picked-up on "April 10, 2007, 20: 00", and an image 200L picked-up on "April 10, 2007, 20: 10".

When the user selects the event button 632 shown in Fig. 8, an instruction for executing the "event mode" is transmitted from the instruction section 511 of Fig. 4 to the picked-up image information/image acquisition section 514.

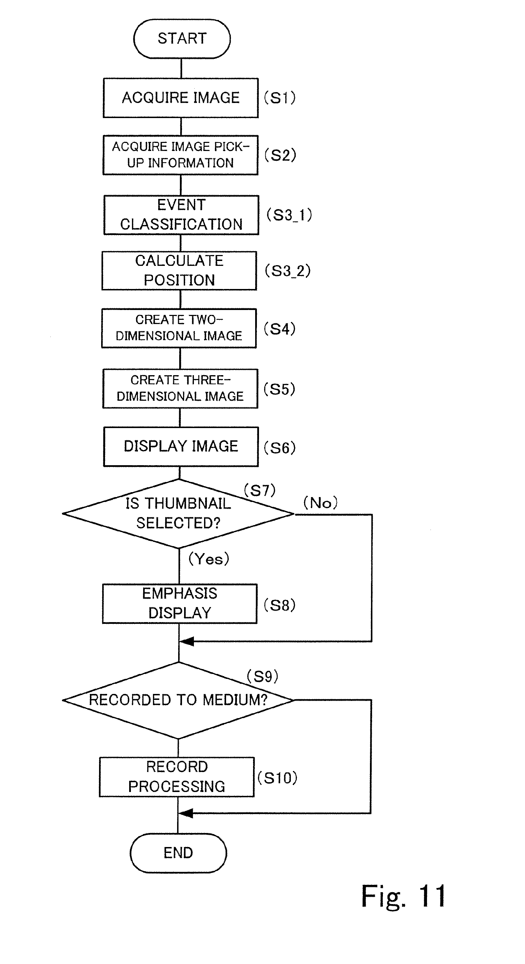

Fig. 11 is a flowchart showing a flow of a processing for displaying a list of picked-up images executed in the event mode.

When it is instructed to execute the "event mode", the picked-up image information/image acquisition section 514 also acquires the thumbnail images and the picked-up image information stored in the storage section 501 (steps S1 and S2 of Fig. 11). The picked-up image information/image acquisition section 514 corresponds to an example of the data acquisition section according to the present invention as well to an example of the date and/or time acquisition section according to the present invention. Further, the processing at step S1 for acquiring the thumbnail images corresponds to an example of the data acquisition step in the display method of the present invention, and the process at step S2 for acquiring program information corresponds to an example of the date/time acquisition step in the display method of the present invention. The acquired picked-up image information is transmitted to the event classification section 524, and the acquired thumbnail images are transmitted to the three-dimensional image creation section 517.

Note that when the picked-up images are classified to event groups and scene groups in the embodiment, various types of classification conditions are preset.

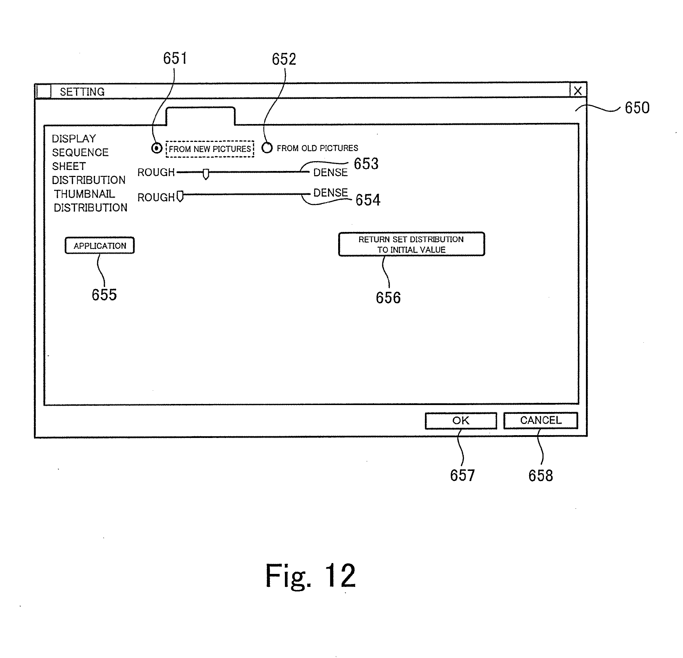

Fig. 12 is a view showing an example of the condition setting screen for setting the classification conditions for classifying the picked-up images.

The condition setting screen 650 shown in Fig. 12 is provided with a first radio button 651, a second radio button 652, a sheet slider 653, a thumbnail slider 654, an application button 655, an initial value button 656, adetermination button 657, and a cancel button 658. The first radio button 651 displays the picked-up images classified to the event group sequentially from the picked-up images having a newer image pick-up date/time, the second radio button 652 displays the picked-up images classified to the event group sequentially from the picked-up images having an older image pick-up date/time, the sheet slider 653 sets the degree of length of a reference period between events for sectioning between the events (maximum value; 1000, minimum value; 0), the thumbnail slider 654 sets the length of a reference period in an event (maximum value; 1000 seconds, minimum value; 0 second) for classifying the picked-up images to plural scene groups in one event, the application button 655 is for applying the set reference period between events and the set reference period in an event, the initial value button 656 is for returning the reference period between events and the reference period in an event to initial values, the determination button 657 is for determining contents to be set, and the cancel button 658 is for canceling set contents.

The example will be described assuming that "10" is set as the reference period between events and "100 seconds" are set as the reference period in an event.

The event classification section 524 classifies the picked-up images to plural event groups based on the relative intervals between the image pick-up dates/times included in the picked-up image information and on a preset reference period between events as well as classifies the picked-up images in the same event group to plural scene groups based on the intervals between the image pick-up dates/times and on a preset reference period in an event (step S3_1 of Fig. 11). The event classification section 524 corresponds to an example of the data classification section according to the present invention. Further, the processing at step 53_1, at which the picked-up images are classified to the event groups and the scene groups, corresponds to an example of the data classification step in the display method of the present invention.

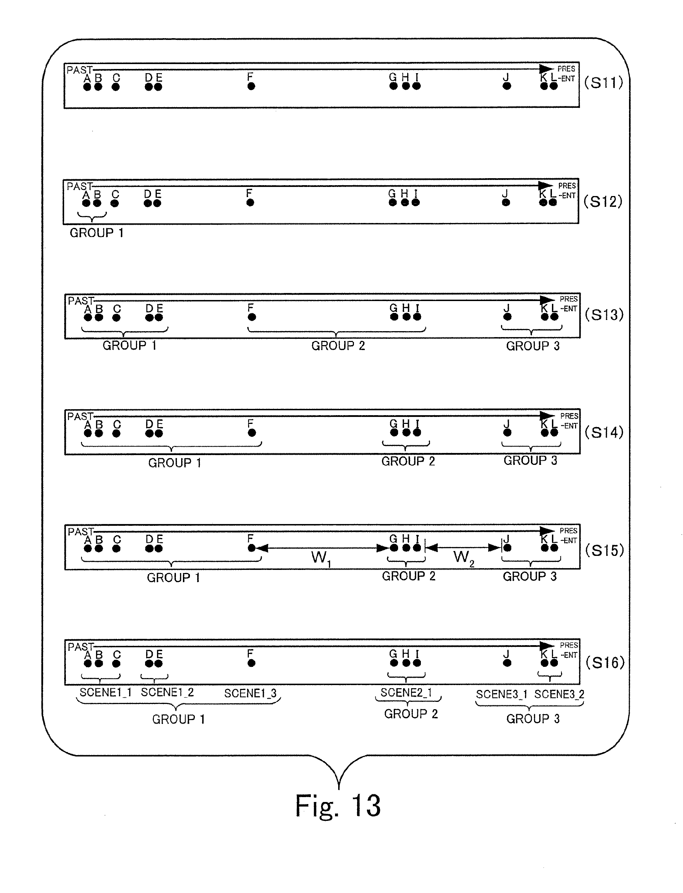

Here, the description of Fig. 11 is interrupted once, and a processing for classifying the picked-up images to the plural event groups will be described using Fig. 13.

Fig. 13 is a flowchart showing a series of processings for classifying plural picked-up images shown in Fig. 10 to the plural event groups by the event classification section 524. Fig. 13 shows the picked-up images 200A to 200L by the alphabet characters added to the ends thereof.

When the picked-up images 200A to 200L shown in Fig. 10 are classified, first, they are sorted sequentially from the one having the oldest image pick-up date/time (step S11 of Fig. 13).

Subsequently, the picked-up image 200A having the oldest image pick-up date/time and the picked-up image 200B having the second oldest image pick-up date/time are classified to a first event group 1 (step S12 of Fig. 13).

Further, the intervals between the image pick-up dates/times of the picked-up images sorted at step S11 are calculated in the sequence of an older image pick-up date/time, and the picked-up images 200C to 200L, which are not yet classified, are classified to the plural event groups based on the relative change of the intervals (step S13 of Fig. 13) . In the embodiment, when an evaluation value (n), which is calculated by the following expression (1), is larger than the reference period between events set by the condition setting screen 650 of Fig. 12 (10 in the example), a picked-up image having the n-th oldest image pick-up date/time (n) is classified to a new event group which is different from that of a picked-up image having the (n-1) -th oldest image pick-up date/time (n-1). Whereas, when the evaluation value (n) is equal to or smaller than the reference period between events, it is classified to the same event group as that of the picked-up image having the image pick-up date/time (n-1).

$$\text{Evaluation value (n) = (Image pick-up date/time (n) -}$$
$$\text{Image pick-up date/time (n-1))/(Image pick-up date/time (n-1)}$$
$$\text{- Image pick-up date/time (n-2))} \quad \dots \text{(1)}$$

In Fig. 13, an evaluation value "2" is calculated based on the interval of "300 seconds" between the picked-up image 200A having the oldest image pick-up date/time and the picked-up image 200B having the second oldest image pick-up date/time and on the interval of "600 seconds" between the picked-up image 200B having the second oldest image pick-up date/time and the picked-up image 200C having the third oldest image pick-up date/time. Since evaluation value "2" is equal to or smaller than the reference period between events "10", the picked-up image 200C is classified to the event group 1 that is the same as the picked-up image 200B. The above classification processing is continued up to the picked-up image 200L having the newest image pick-up date/time. As a result, at step 13 of Fig. 13, the picked-up image 200A having the oldest image pick-up date/time to the picked-up image 200E having the fifth oldest image pick-up date/time are classified to a first group 1, the picked-up image 200F having the sixth oldest image pick-up date/time to the picked-up image 200I having the ninth oldest image pick-up date/time are classified to a second group 2, and the picked-up image 200J having the tenth oldest image pick-up date/time to the picked-up image 200L having the twelfth oldest image pick-up date/time are classified to a third group 3.

Ordinarily, although images are picked-up at short intervals in the events such as travel, the events occur at a certain degree of intervals. As shown in the expression (1), the images picked up in travel of several days can be accurately classified to the same event group by classifying the picked-up images to the event group using the relative intervals between image pick-up dates/times.

Subsequently, the sections between the classified event groups are adjusted as described below (step S14 of Fig. 13) . In the embodiment, when two continuous old and new event groups (N-1) and N satisfy the following expression (2), the classification of the picked-up image having the oldest image pick-up date/time (n) in the new event group N is changed to the old event group (N-1).

$$\text{Image pick-up date (n) - Image pick-up date (n-1) < Image}$$
$$\text{pick-up date (n+1) - Image pick-up date (n)} \quad \dots \text{(2)}$$

where, (n-1) shows the image pick-up date/time of the newest picked-up image in the old event group (N-1), (n) shows the image pick-up date/time of the oldest picked-up image in the new event group N, and (n+1) shows the image pick-up date/time of the second oldest picked-up image in the new event group N. In the example of Fig. 13, the classification of the picked-up image 200F is changed to the first event group because the difference of "23 hours and 20 minutes" between the image pick-up date/time of the oldest picked-up image 200F in the second event group and the image pick-up date of the newest picked-up image 200E in the first event group 1 is smaller than the difference of "47 hours" between the image pick-up date/time of the second oldest picked-up image 200G in the second event group and the image pick-up date/time of the oldest picked-up image 200F in the second event group.

When the picked-up images are classified based on the relative intervals between the image pick-up dates/times, there is a possibility, when a subject is continuously picked up, an image, which is picked up in several minutes after the subject is continuously picked up, is classified to an event group different from the event group to which the continuously picked up subject is classified. When the sections of the respective classified event groups are adjusted according to the expression (2), the picked-up images can be more accurately classified.

Subsequently, when the intervals between the respective event groups are smaller than a predetermined threshold value (10 minutes in the embodiment), these event groups are coupled with each other (step S15 of Fig. 13). In the example shown in Fig. 13, since the interval w1 between the oldest event group 1 and the second oldest event group 2 is "23 hours" and the interval w2 between the second oldest event group 2 and the third oldest event group 3 is "29 hours and 40 minutes", that is, since they are more than 10 minutes, these event groups are not coupled with each other.

Since an event ordinarily occurs after several hours pass from the occurrence of a previous event, when the intervals between respective event groups are short, the picked-up images can be more accurately classified by coupling the event groups.

Finally, the intervals between the image pick-up dates/times of the picked-up images 200A to 200L of the respective event groups are calculated in the sequence of an older image pick-up date/time, and the picked-up images 200A to 200L, which are classified to the respective event groups, are further classified to plural scene groups based on the intervals (step S16 of Fig. 13). In the embodiment, regarding a picked-up image having the n-th oldest image pick-up date/time (n) in the respective event group, when an evaluation value (n), which is calculated by the following expression (3), is larger than the reference period in an event set by the condition setting screen 650 of Fig. 12 (100 seconds in the example), the picked-up image having the image pick-up date/time (n) is classified to a new scene group different from that of a picked-up image having the image pick-up date/time (n-1). Whereas, when the evaluation value (n) is equal to or smaller than the reference period in an event, the picked-up image having the image pick-up date/time (n) is classified to the same scene group as that of the picked-up image having the image pick-up date/time (n-1).

$$\texttt{Evaluation value (n) = Image pick-up date/time (n) -}$$
$$\texttt{Image pick-up date/time (n-1)} \quad \texttt{... (3)}$$

In the example of Fig. 13, the three first to third oldest picked-up images 200A, 200B, 200C in the first event group 1 are classified to the a first scene group 1_1, the fourth and fifth oldest picked-up images 200D, 200E in the first event group 1 are classified to a second scene group 1_2, the newest picked-up image 200F in the first event group 1 is classified to a third scene group 1_3, all the picked-up images 200G, 200H, 200I in the second event group 2 are classified to the same scene group 2_1, the oldest picked-up image 200J in the third event group 3 is classified to a first scene group 3_1, and the remaining picked-up images 200K, 200L in the third event group 3 are classified to a second scene group 3_2.

In travel and the like, an image pick-up operation is executed on arriving at a destination and interrupted during movement from the destination to another destination in many cases. When the picked-up images in one event group are classified to plural scene groups based on the intervals between image pick-up dates/times, the images picked up in travel can be classified to respective events.

The picked-up images 200A to 200L are classified to the event groups and the scene groups as described above.

Description will be continued returning to Fig. 11.

A result of classification is transmitted from the event classification section 524 to the position calculation section 515.

The position calculation section 515 calculates the three-dimensional positions and times on the three-dimensional space, the axes of which show a time, a scene group, and an event group and to which the result of classification transmitted from the event classification section 524 correspond, and the two-dimensional positions, which correspond to the three-dimensional positions, on the two-dimensional space the axes of which shows a time and an event group (step S3_2 of Fig. 11).

The calculated positions on the two-dimensional space (two-dimensional position) are transmitted to the two-dimensional image creation section 516, and the calculated positions on the three-dimensional space (three-dimensional positions) are transmitted to the three-dimensional image creation section 517.

The two-dimensional image creation section 516 creates a two-dimensional image (step S4 of Fig. 11), the three-dimensional image creation section 517 creates a three-dimensional image (step S5 of Fig. 11), and the number display section 523 calculates the number of the picked-up images displayed on the foremost surface on the three-dimensional image.

The display section 519 displays the two-dimensional image created by the two-dimensional image creation section 516, the three-dimensional image created by the three-dimensional image creation section 517, the scroll bar, and the number of the pick-up images calculated by the number display section 523 on the display screen 102a (step S6 of Fig. 5). A combination of the three-dimensional image creation section 517 and the display section 519 corresponds to an example of the display section according to the present invention, a combination of the two-dimensional image creation section 516 and the display section 519 corresponds to an example of the auxiliary display section according to the present invention, and a combination of the number display section 523 and the display section 519 corresponds to an example of the data number display section according to the present invention.

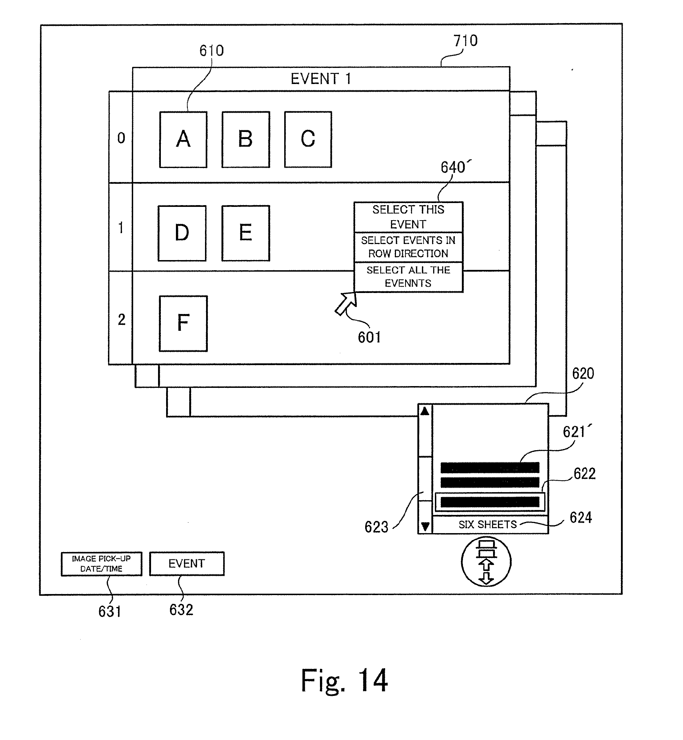

Fig. 14 is a view showing an example of the display screen 102a on which a three-dimensional image 710, a two-dimensional image 620, and the scroll bar 623 are displayed.

In the three-dimensional image 710 shown in Fig. 14, the thumbnail images 610 of the picked-up images classified to the same event group are arranged side by side and displayed on the same surface, and further the thumbnail images 610 of the picked-up images are classified to the respective scene groups and displayed. The positions of the respective thumbnail images 610 on the Y-axis show the scene group to which the thumbnail images 610 are classified, and the respective thumbnail images 610 are arranged in the sequence of image pick-up dates/times along the X-axis.

As described above, according to the list display device 500 of the embodiment, since the thumbnail images of the images picked up in the same event group are arranged on the same surface in the three-dimensional image 710, the images picked up in travel can be collectively confirmed.

Further, plural marks 621' extending along the X-axis (time axis) are disposed on the two-dimensional image 620, and the respective marks 621' show the respective event groups. Further, the two-dimensional image 620 also displays the scroll bar 623, which extends along the Y-axis (event group axis) and designates an event group on the two-dimensional image 620, the frame 622, which surrounds the mark 621' of the event group selected by the scroll bar 623 , the number display section 624, which shows the number of the picked-up images classified to the event group selected by the scroll bar 623, and the like.

When the user scrolls the scroll bar 623, an instruction section 511 shown in Fig. 4 switches an event group according to a scroll amount, and a switched event group is transmitted to the control section 522. The control section 522 instructs the two-dimensional image creation section 516 and the three-dimensional image creation section 517 to switch an event group to thereby move the frame 622 on the two-dimensional image 620 to the position of the switched event group as well as rearrange the thumbnail images 610 on the three-dimensional image 710 so that the thumbnail images of the switched event group are disposed on the foremost surface. The instruction section 511 corresponds to an example of the designation section according to the present invention, and the control section 522 corresponds to an example of the display control section according to the present invention.

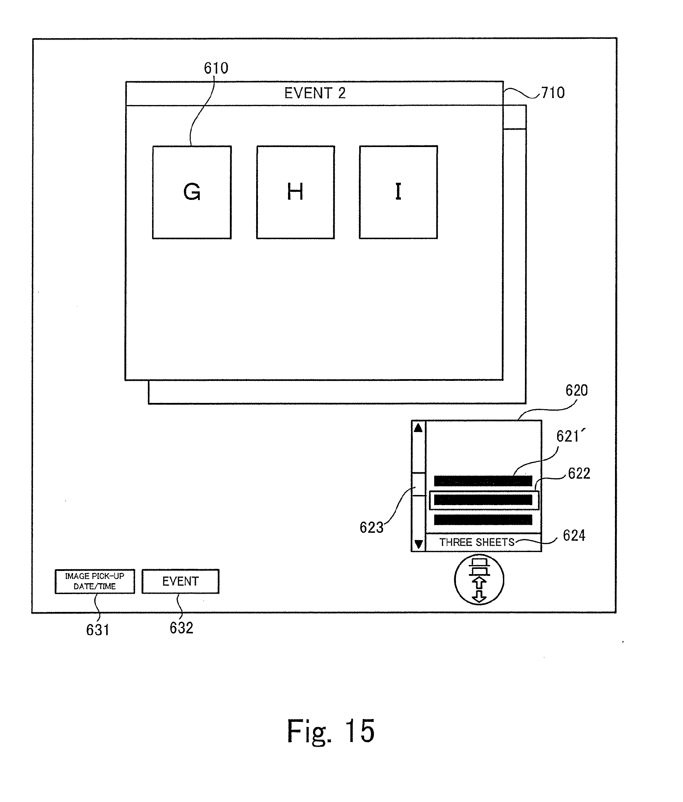

Fig. 15 is a view showing an example of the display screen 102a after the event group is switched.

In Fig. 15, the frame 622 surrounds the mark 621' showing the second event group, and the number display section 624 shows the number of the picked-up images which belong to the second event group. Further, the three-dimensional image 710 displays the thumbnail images 610 of the picked-up images which belong to the second event group.

The user can easily switch the displayed three-dimensional image 710 making use of the scroll bar 623.

Further, when the user clicks the right button of the mouse indicating the pointer 601 as shown in Fig. 14, a popup window 640' for selecting the thumbnail images is displayed.

The popup window 640' shown in Fig. 14 provides an "event menu" for collectively selecting the thumbnail images showing the picked-up images classified to the same event group, a "row menu" for collectively selecting the thumbnail images showing the picked-up images classified to the same scene group, and an "entire image menu" for collectively selecting the thumbnail images showing all the picked-up images.

When the user selects the thumbnail images 610 using the popup window 640' (step S7 of Fig. 11: Yes), designated contents are transmitted from the instruction section 511 of Fig. 4 to the emphasis display section 520, and the emphasis display section 520 displays the selected thumbnail images 610 and the marks 621 corresponding to the thumbnail images 610 in the emphasized fashion (step S8 of Fig. 11) likewise the "image pick-up date/time mode" shown in Fig. 9.

Further, when the user clicks the mouse 104 shown in Fig. 1 on the right side thereof in the state that the thumbnail images 610 are selected, a popup window is displayed to store the picked-up images of the selected thumbnail images 610 to a recording medium.

When the user selects an instruction displayed on the popup window using the pointer 601 (step S9 of Fig. 11: Yes), instructed contents are transmitted to the image storage section 521 of Fig. 4, and the picked-up image data of the selected thumbnail images 610 is stored to the DVD (not shown) and the like mounted on the personal computer 100 (step S10 of Fig. 11).

As described above, according to the embodiment, plural picked-up images can be accurately classified to the plural event groups , and a list of the picked-up images can be displayed so that they can be viewed easily.

Although the example, in which the personal computer is applied as the display device, is described above, the display device of the present invention may be a video recorder and the like.

Although the example, in which the list of the picked-up image data showing the picked-up images is displayed, is described above, the data according to the present invention may be, for example, program data showing programs, document data showing documents, and the like as long as dates/times are associated with the data.

Although the example, in which the plural groups are arranged in the depth direction and the thumbnail images are three-dimensionally displayed, is described above, the display section according to the present invention may be, for example, a display section for two-dimensionally displaying plural picked-up images in the respective groups or displaying plural picked-up images in different colors as long as the plural picked-up images are classified to the respective groups and displayed.

Further, although the example, in which the thumbnail images are created when the picked-up images are recorded, is described above, the display section according to the present invention may create the thumbnail images when the list of the picked-up images is displayed.

**Claims**

1. A display device (500) comprising:

   a data acquisition section (514) which acquires a plurality of data with which dates and/or times are associated;
   a date and/or time acquisition section (514) which acquires dates and/or times associated with the plurality of data;
   a data classification section (524) which classifies the plurality of data to a plurality of groups which belong to a plurality of time regions which do not overlap with each other, based on the length of intervals between the dates and/or times acquired by the date and/or time acquisition section; and
   a display section (519) which classifies a plurality of icons which show the plurality of data to the groups and displays the plurality of icons.

2. The display device according to claim 1, wherein the data is image data which represents images of subj ects and with which the image pick-up dates and/or times of the images are associated, and
   the date and/or time acquisition section (514) acquires the image pick-up dates and/or times.

3. The display device according to claim 1, wherein the data classification section classifies the plurality of data to the plurality of groups based on a relative length of intervals between the dates and/or times acquired by the date and/or time acquisition section.

4. The display device according to claim 1, wherein when the data classification section classifies the plurality of data to the groups, the data classification section time-sequentially confirms intervals between the dates and/or times associated with the data, and the two data, with which are associated two dates and/or times across an interval whose length is changed in excess of a predetermined degree with respect to an interval immediately before the interval, are classified to different groups.

5. The display device according to claim 1, wherein the display section displays a three-dimensional space having an axis of the groups and disposes the icons of the data to the position of the group, to which the data is classified, on the three-dimensional space.

6. The display device according to claim 1, comprising an auxiliary display section (519) which displays a two-dimensional space having an axis of the groups and disposes a mark to the position corresponding to a group to which the data is classified on the two-dimensional space to show that data exists in the group.

7. The display device according to claim 6, further comprising:

   a designation section (511) which designates a group on the two-dimensional space by displaying a designation frame along an axis different from the axis of the groups on the two-dimensional space, and moving the designation frame along the axis of the groups; and
   a display control section (522) which causes the display section to dispose the icons in a three-dimension display space with the group designated by the designation section displayed on a foremost surface.

8. The display device according to claim 7, further comprising a data number display section (519) which displays the number of data classified to the group designated by the designation section.

9. The display device according to claim 1, wherein the data acquisition section acquires the plurality of data from a storage section (501) in which the plurality of data is stored.

10. Adisplayprogram storage medium (300) which stores a display program (400) which is executed and constructs in a computer:

    a data acquisition section (414) which acquires a plurality of data with which dates and/or times are associated;
    a date and/or time acquisition section (414) which acquires the dates and/or times associated with the plurality of data;
    a data classification section (415) which classifies the plurality of data to a plurality of groups belonging to a plurality of time regions which do not overlap with each other, based on the lengthof intervals between the dates and/or times acquired by the date and/or time acquisition section; and

a display section (419) which classifies a plurality of icons showing the pluralityof data to the groups and displays the icons.

11. A display method comprising:

a data acquisition step (S1) which acquires a plurality of data with which dates and/or times are associated;
a date and/or time acquisition step (S2) which acquires the dates and/or times associated with the plurality of data;
a data classification step (S3-1) which classifies the plurality of data to a plurality of groups belonging to a plurality of time regions which do not overlap with each other, based on the length of intervals between the dates and/or times acquired in the date and/or time acquisition step; and
a display step (S6) which classifies a plurality of icons showing the plurality of data to the groups and displays the icons.

# Fig. 1

100

105

| 111 | CPU |
| 112 | MAIN MEMORY |
| 113 | HARD DISK DEVICE |
| 102 | IMAGE DISWPLAY DEVICE |

BUS

| KEYBOARD | 103 |
| MOUSE | 104 |
| CD/DVD DRIVE | 114 |
| FD DRIVE | 115 |

300

310

116 — COMMUNICATION INTERFACE

# Fig. 2

CD-ROM — 300

LIST DISPLAY PROGRAM — 400

| INSTRUCTION SECTION | — 411 |

| CAPTURE SECTION | — 412 |

| REGISTRATION SECTION | — 413 |

| IMAGE PICK-UP INFORMATION/ IMAGE ACQUISITION SECTION | — 414 |

| EVENT CLASSIFICATION SECTION | — 415 |

| POSITION CALCULATION SECTION | — 416 |

| TWO-DIMENSIONAL IMAGE CREATION SECTION | — 417 |

| THREE-DIMENSIONAL IMAGE CREATION SECTION | — 418 |

| DISPLAY SECTION | — 419 |

| EMPHASIS DISPLAY SECTION | — 420 |

| IMAGE STORAGE SECTION | — 421 |

| NUMBER DISPLAY SECTION | — 422 |

| CONTROL SECTION | — 423 |

Fig. 3

Fig. 4

START

ACQUIRE IMAGE (S1)

ACQUIRE IMAGE PICK-UP INFORMATION (S2)

CALCULATE POSITION (S3)

CREATE TWO-DIMENSIONAL IMAGE (S4)

CREATE THREE-DIMENSIONAL IMAGE (S5)

DISPLAY IMAGE (S6)

IS THUMBNAIL SELECTED? (S7) (No)

(Yes)

EMPHASIS DISPLAY (S8)

RECORDED TO MEDIUM? (S9)

RECORD PROCESSING (S10)

END

Fig. 5

Fig. 6

Fig. 7

EP 1 983 418 A1

Fig. 8

Fig. 9

| 200A | 200B | 200C | 200D | 200E |
|---|---|---|---|---|
| A | B | C | D | E |
| 4/6 9:00 | 4/6 9:05 | 4/6 9:15 | 4/6 10:30 | 4/6 10:40 |

| 200F | 200G | 200H | 200I | 200J |
|---|---|---|---|---|
| F | G | H | I | J |
| 4/7 10:00 | 4/9 9:00 | 4/9 9:10 | 4/9 9:20 | 4/10 15:00 |

| 200K | 200L |
|---|---|
| K | L |
| 4/10 20:00 | 4/10 20:10 |

Fig. 10

START

ACQUIRE IMAGE (S1)

ACQUIRE IMAGE PICK-UP INFORMATION (S2)

EVENT CLASSIFICATION (S3_1)

CALCULATE POSITION (S3_2)

CREATE TWO-DIMENSIONAL IMAGE (S4)

CREATE THREE-DIMENSIONAL IMAGE (S5)

DISPLAY IMAGE (S6)

(S7) IS THUMBNAIL SELECTED? (No)

(Yes)

EMPHASIS DISPLAY (S8)

(S9) RECORDED TO MEDIUM?

RECORD PROCESSING (S10)

END

Fig. 11

24

651    652

SETTING                                                                    X
                                                                                ⌐ 650

DISPLAY                    ⊙ [FROM NEW PICTURES]    ○ FROM OLD PICTURES
SEQUENCE
SHEET           ROUGH————ᵾ————————DENSE  653
DISTRIBUTION
THUMBNAIL       ROUGHᵾ—————————————DENSE  654
DISTRIBUTION

        [ APPLICATION ]                    [ RETURN SET DISTRIBUTION
                                              TO INITIAL VALUE ]

          655                                    656

                                            [ OK ]    [ CANCEL ]

                                             657       658

Fig. 12

PAST ──────────────────────────────────────────────────► PRES
A B  C   D E          F              G H I          J   K L ‑ENT   (S11)
● ● ●   ● ●          ●              ● ● ●          ●   ● ●

PAST ──────────────────────────────────────────────────► PRES
A B  C   D E          F              G H I          J   K L ‑ENT   (S12)
● ● ●   ● ●          ●              ● ● ●          ●   ● ●
‿‿‿
GROUP 1

PAST ──────────────────────────────────────────────────► PRES
A B  C   D E          F              G H I          J   K L ‑ENT   (S13)
● ● ●   ● ●          ●              ● ● ●          ●   ● ●
‿‿‿‿‿‿‿        ‿‿‿‿‿‿‿‿‿‿        ‿‿‿‿
GROUP 1              GROUP 2              GROUP 3

PAST ──────────────────────────────────────────────────► PRES
A B  C   D E          F              G H I          J   K L ‑ENT   (S14)
● ● ●   ● ●          ●              ● ● ●          ●   ● ●
‿‿‿‿‿‿‿‿‿‿‿‿‿        ‿‿‿‿        ‿‿‿‿
GROUP 1                      GROUP 2      GROUP 3

PAST ──────────────────────────────────────────────────► PRES
A B  C   D E          F              G H I          J   K L ‑ENT   (S15)
● ● ●   ● ●          ● ◄──── W₁ ────► ● ● ●│◄── W₂ ──►│● ● ●
‿‿‿‿‿‿‿‿‿‿‿‿‿                ‿‿‿‿        ‿‿‿‿
GROUP 1                              GROUP 2      GROUP 3

PAST ──────────────────────────────────────────────────► PRES
A B  C   D E          F              G H I          J   K L ‑ENT   (S16)
● ● ●   ● ●          ●              ● ● ●          ●   ● ●
‿‿‿ ‿‿‿    ‿‿‿‿          ‿‿‿‿        ‿‿‿ ‿‿‿
SCENE1_1 SCENE1_2  SCENE1_3            SCENE2_1        SCENE3_1 SCENE3_2
‿‿‿‿‿‿‿‿‿‿‿‿‿          ‿‿‿‿        ‿‿‿‿‿‿‿
GROUP 1                              GROUP 2          GROUP 3

# Fig. 13

Fig. 14

Fig. 15

**European Patent Office**

## EUROPEAN SEARCH REPORT

Application Number

EP 08 15 4504

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 186 987 A (SONY CORP [JP]) 13 March 2002 (2002-03-13) * the whole document * | 1-11 | INV. G06F3/048 |
| X | EP 1 638 102 A (SONY CORP [JP]) 22 March 2006 (2006-03-22) * the whole document * | 1-11 | |
| X | WO 99/01830 A (OBVIOUS TECHNOLOGY INC [US]) 14 January 1999 (1999-01-14) * page 16 - page 28; claims 1-9; figures 6-9 * | 1-11 | |
| A | US 2005/246643 A1 (GUSMORINO PAUL A [US] ET AL) 3 November 2005 (2005-11-03) * abstract; figures 20-22 * | 1-11 | |
| A | US 2005/246331 A1 (DE VORCHIK DAVID G [US] ET AL) 3 November 2005 (2005-11-03) * the whole document * | 1-11 | |
| A | US 2007/083911 A1 (MADDEN THOMAS [US] ET AL) 12 April 2007 (2007-04-12) * paragraphs [0102] - [0185]; figures 6-37 * | 1-11 | TECHNICAL FIELDS SEARCHED (IPC) G06F G11B |

The present search report has been drawn up for all claims

| Place of search | Date of completion of the search | Examiner |
|---|---|---|
| Munich | 14 August 2008 | Brandenburg, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 15 4504

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2008

| Patent document cited in search report | | Publication date | Patent family member(s) | | Publication date |
|---|---|---|---|---|---|
| EP 1186987 | A | 13-03-2002 | CN | 1341889 A | 27-03-2002 |
| | | | JP | 2002082745 A | 22-03-2002 |
| | | | KR | 20020020272 A | 14-03-2002 |
| | | | US | 2002054164 A1 | 09-05-2002 |
| EP 1638102 | A | 22-03-2006 | JP | 2006115467 A | 27-04-2006 |
| | | | KR | 20060051357 A | 19-05-2006 |
| | | | US | 2006059426 A1 | 16-03-2006 |
| WO 9901830 | A | 14-01-1999 | EP | 0992010 A1 | 12-04-2000 |
| | | | US | 6573907 B1 | 03-06-2003 |
| | | | US | 5963203 A | 05-10-1999 |
| US 2005246643 | A1 | 03-11-2005 | US | 2005251748 A1 | 10-11-2005 |
| US 2005246331 | A1 | 03-11-2005 | US | 2006004692 A1 | 05-01-2006 |
| | | | US | 2005283476 A1 | 22-12-2005 |
| | | | US | 2006200466 A1 | 07-09-2006 |
| US 2007083911 | A1 | 12-04-2007 | NONE | | |

EPO FORM P0459

**EP 1 983 418 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11025541 A
- JP 2002084469 A
- JP 10243309 A
- JP 2004172849 A